# FASCICULE DE BREVET EUROPEEN

(11) **EP 3 861 878 B1**
(45) Date de publication et mention de la délivrance du brevet: **09.08.2023**
(21) Numéro de dépôt: 21155341.7
(22) Date de dépôt: 04.02.2021
(51) Int. Cl.: A41D 13/01, B60Q 1/26, F21V 33/00, G08B 5/36, D03D 1/00, G08B 5/00, A41D 1/00

(54) **DISPOSITIF APTE À RECEVOIR ET/OU ÉMETTRE DES SIGNAUX ÉLECTRIQUES ET UTILISATION D'UN TEL DISPOSITIF DANS UN VÊTEMENT DE SÉCURITÉ**
VORRICHTUNG, DIE ELEKTRISCHE SIGNALE EMPFANGEN UND/ODER SENDEN KANN UND VERWENDUNG EINER SOLCHEN VORRICHTUNG IN EINEM SICHERHEITSKLEIDUNGSSTÜCK
DEVICE CAPABLE OF RECEIVING AND/OR EMITTING ELECTRICAL SIGNALS AND USE OF SUCH A DEVICE IN A SAFETY GARMENT

(30) Priorité: 07.02.2020 FR 2001212
(43) Date de publication de la demande: 11.08.2021
(73) Titulaire: HI!MOBEE, 45380 La Chapelle-Saint-Mesmin (FR)
(72) Inventeur: GUÉRÉMY, Éric, 45100 ORLÉANS (FR); DUMUIS, Nicolas, 45380 LA CHAPELLE-SAINT-MESMIN (FR)
(74) Mandataire: Novagraaf Technologies

(56) Documents cités:
- EP-A1- 3 598 906
- DE-A1-102016 224 565
- US-A- 5 455 749
- US-A1- 2006 182 297

## Description

L'objet de la présente invention concerne le domaine des dispositifs comportant une sangle textile et un ou plusieurs capteurs physiques aptes à recevoir et/ou émettre des signaux électriques, ainsi que l'utilisation de tels dispositifs dans un vêtement de sécurité.

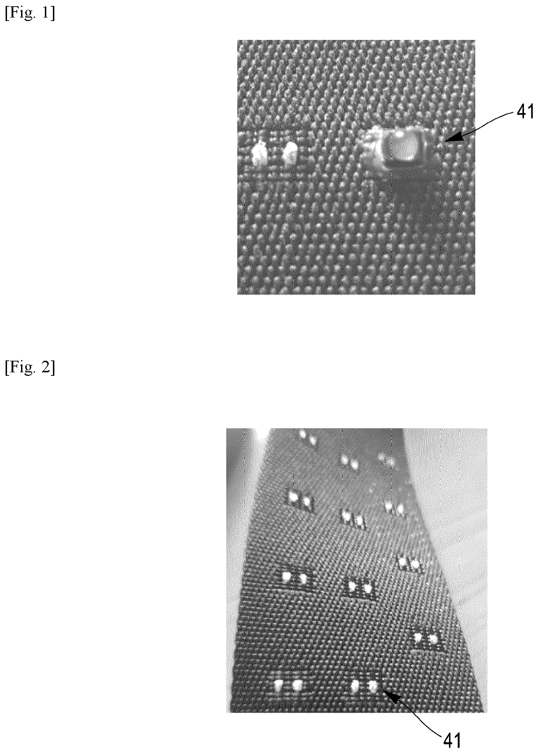

A l'heure actuelle, il est connu de l'homme du métier d'utiliser des dispositifs lumineux comportant une sangle constituée d'un tissu traversé par des fils conducteurs et présentant des flottées (sorties des fils conducteurs à l'extérieur de la sangle), sur lesquelles sont fixées ou collées des diodes électroluminescentes (généralement désignées par l'acronyme anglais LED, pour « *light-emitting diode* », ou DEL en français), comme illustré sur les figures 1 et 2. Or, un tel dispositif présente des limitations et inconvénients liés notamment à la nécessité de fixer directement (notamment par collage ou soudage) sur la sangle les LEDs. En effet la fixation de LEDs par soudage ou collage sur les flottées est non seulement difficile à réaliser, mais nécessite également un grand nombre de soudures ou collages. En outre, cela implique d'être limité à l'utilisation de ce type de capteur et ne permet pas de réutiliser la sangle du dispositif lorsque l'on souhaite changer d'éléments électriques ou électroniques. En outre, en cas de mauvaise soudure ou de collage déficient, les opérations de reprise sont longues, complexes et coûteuses. La demande de brevet allemand

DE102016224565 décrit un dispositif selon le préambule de la revendication 1, dont une unité textile telle qu'une sangle qui peut être en textile. Cette unité textile comporte un ou plusieurs éléments fonctionnels électroniques connectées au tissu et une unité de contact (circuit imprimé) pour établir un contact électriquement conducteur avec l'élément fonctionnel. L'unité de contact est maintenue au tissu textile avec un rivet. La demande de brevet américain US 2006/182297 décrit un vêtement audioportable comportant un ensemble de haut-parleur : il ne s'agit pas d'un assemblage lumineux.

Afin de pallier les inconvénients précités, le demandeur a mis au point un dispositif apte à recevoir et/ou émettre des signaux physiques, ledit dispositif comprenant :
- une sangle textile (en tissé ou non tissé) de largeur L et s'étendant selon un axe longitudinal x,
- au moins un fil conducteur intégré(s) dans ladite sangle textile et s'étendant le long de l'axe longitudinal x ;
- un circuit imprimé (généralement désigné par l'acronyme anglais PCB pour « *Printed Circuit Board* ») disposé au-dessus de ladite sangle textile et muni d'au moins capteur physique apte à recevoir et/ou émettre des signaux physiques (par exemple électriques, lumineux, ou hertziens),
- un boitier (souple ou rigide) contenant ladite sangle textile avec ledit fil conducteur et ledit circuit imprimé, et
- un moyen de maintien dudit boitier enserrant la sangle textile et le fil conducteur et le circuit imprimé pour les connecter de manière permanente, le moyen de maintien étant en un matériau conducteur électrique pour assurer l'alimentation électrique dudit circuit imprimé.

Selon un mode de réalisation avantageux de la présente invention, le dispositif selon l'invention peut être un assemblage lumineux comprenant une pluralité d'éléments électriques ou électroniques constitués par des diodes électroluminescentes et le boitier peut être muni d'un diffuseur lumineux.

De manière avantageuse, on pourra utiliser dans le dispositif selon l'invention une sangle textile tissée.

Le boitier pourra par exemple se présenter sous forme de barrette.

De manière avantageuse, le boitier peut être muni de plusieurs rangées de N diffuseurs lumineux chacune, N étant un nombre entier au moins égal à 2.

Selon l'invention, on pourra utiliser dans le dispositif selon l'invention un moyen de maintien qui comprend un élément conducteur de l'électricité choisi parmi les vis, les agrafes, les picots (ou pointes) et les rivets, et une plaque de serrage en un matériau isolant électrique disposée sous la sangle textile.

La présente invention a également pour objet l'utilisation, dans un vêtement de sécurité lumineux, du mode de réalisation du dispositif sous forme d'assemblage lumineux.

D'autres caractéristiques et avantages de l'invention ressortiront clairement de la description détaillée qui en est faite ci-après, à titre indicatif et nullement limitatif, en référence aux dessins annexés dans lesquels :
[Fig. 1] est une photographie montrant une sangle connue de l'art antérieur ; cette figure est commentée dans la partie introductive de la présente demande relative à l'art antérieur [Fig. 2] est une photographie montrant une sangle connue de l'art antérieur ; cette figure est commentée dans la partie introductive de la présente demande relative à l'art antérieur ;
[Fig. 3] représente schématiquement une coupe transversale d'un premier mode de réalisation du dispositif selon l'invention, dans lequel les capteurs physiques sont des diodes électroluminescentes (ou LEDs) ;
[Fig. 4] est une photographie montrant un circuit imprimé muni de 3 LEDs, utilisé dans le dispositif selon l'invention représenté à la figure 3 ;
[Fig. 5] représente schématiquement une vues en perspective d'une variante du dispositif selon l'invention de [Fig 1], dans laquelle le boitier est muni d'un diffuseur lumineux de forme sensiblement rectangulaire ;
[Fig. 6] représente schématiquement une vues en perspective d'une variante du dispositif selon l'invention de [Fig 1], dans laquelle le boitier est muni d'un diffuseur lumineux de forme sensiblement rectangulaire (la figure 6 se différenciant de la figure 5 par la présence de motifs décoratifs sur la sangle) ;
[Fig. 7] représente schématiquement une vue en perspective d'une autre variante du dispositif selon l'invention de la figure 1, comprenant 3 boitiers, chacun étant muni de trois diffuseurs lumineux de circulaires ;
[Fig. 8] représente schématiquement une vue en perspective d'une autre variante du dispositif selon l'invention de la figure 1, comprenant un seul boitier de forme ovoïdale muni de de trois diffuseurs lumineux de circulaires ;
[Fig. 9] représente schématiquement une vue en perspective d'une autre variante du dispositif selon l'invention de la figure 1, dans laquelle le boitier est muni d'un diffuseur lumineux de forme allongée ; et
[Fig. 10] illustre schématiquement en vue de face un vêtement de sécurité lumineux comprenant deux sangles textiles, qui sont chacune munies de 4 boitiers et 4 PCB.

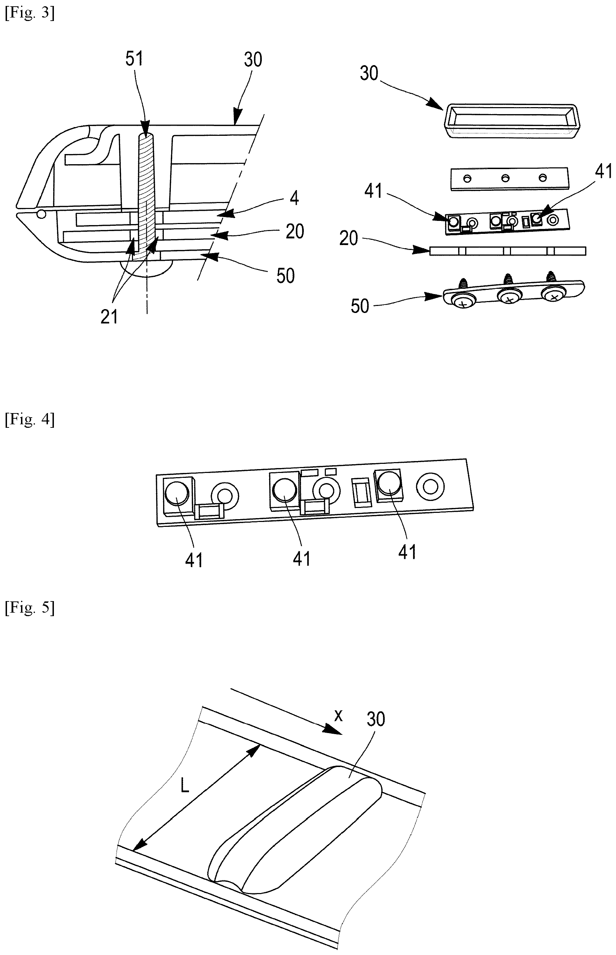

Sur [Fig. 3] est représenté schématiquement un mode de réalisation du dispositif selon l'invention, dans lequel les capteurs 41 sont des diodes électroluminescentes. En particulier, la figure 3 montre schématiquement en perspective latérale que le dispositif + selon l'invention comprend
- une sangle textile 20 de largeur L en matériau tissé et s'étendant selon un axe longitudinal x, une pluralité de fils conducteurs 21 intégrés dans la sangle textile 20 et s'étendant le long de l'axe longitudinal ;
- un circuit imprimé 4 disposé au-dessus de la sangle textile 20 et muni de 3 diodes électroluminescentes (comme montré par la figure 4) ;
- un boitier 3 de type barrette sur la sangle textile 20 et le circuit imprimé 4 ;
- un moyen de maintien du boitier 3 enserrant la sangle textile 20, le circuit imprimé 4 et le boitier 3 pour les connecter de manière permanente, le moyen de maintien étant comprenant un élément conducteur de l'électricité de type vis 51 agissant en combinaison avec une plaque de serrage 50 en matériau isolant électrique disposée sous la sangle textile 20.

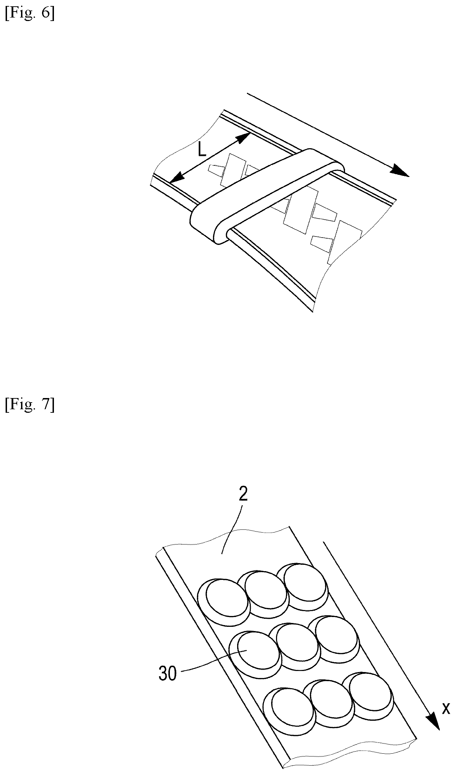

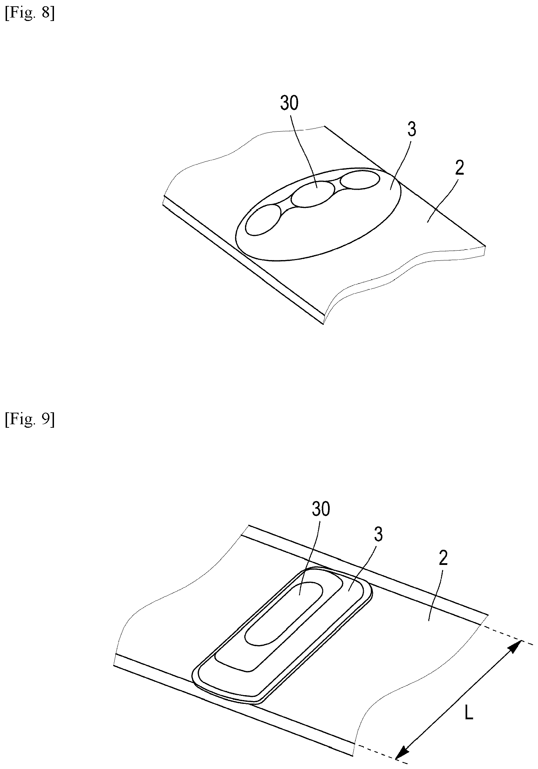

[Fig. 5], [Fig. 6], [Fig. 7], [Fig. 8] et [Fig. 9] montrent que le boitier 3 du dispositif + selon l'invention comprend en outre un ou plusieurs diffuseurs lumineux 30, selon différentes configurations :
- notamment un boitier avec un unique diffuseur lumineux sous forme sensiblement rectangulaire sur les figures 5 et 6, ou simplement allongée d'après la figure 9 ; puis
- un boitier sous forme ovoïdale muni de trois diffuseurs lumineux de circulaires, comme illustré sur la figure 8, ou
- 3 boitiers, qui sont chacun munis de de trois diffuseurs lumineux de circulaires comme illustré sur la figure 7.

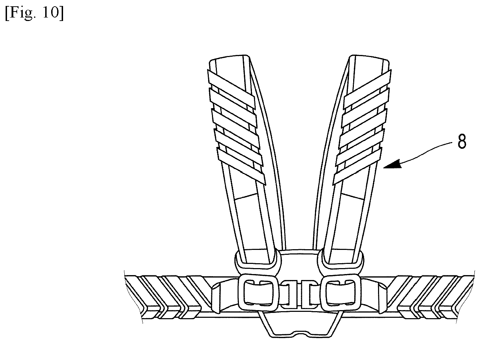

[Fig. 10] illustre schématiquement en vue de face un vêtement de sécurité lumineux comprenant deux sangles textiles 20, qui sont chacune munies de 4 boitiers et 4 PCB.

## Revendications

1. Dispositif apte à recevoir et/ou émettre des signaux physiques, ledit dispositif comprenant :
• une sangle textile (20) de largeur L et s'étendant selon un axe longitudinal (x), - au moins un fil conducteur (21) intégré(s) dans ladite sangle textile (20) et s'étendant le long de l'axe longitudinal (x),
• un circuit imprimé (4) disposé au-dessus de ladite sangle textile (20) et muni d'au moins un capteur physique (41) apte à recevoir et/ou émettre des signaux physiques,
• un boitier (3) disposé sur ladite sangle textile (20) avec ledit fil conducteur (21) et ledit circuit imprimé,
• un moyen de maintien enserrant ladite sangle textile (20) , ledit circuit imprimé (4) et ledit boitier (3) pour les connecter de manière permanente, ledit moyen de maintien étant en un matériau conducteur électrique pour assurer l'alimentation électrique dudit circuit imprimé (4),
• le moyen de maintien comprenant un élément conducteur de l'électricité (51) choisi parmi les vis, les agrafes, les picots et les rivets et ledit dispositif étant **caractérisé en ce que** le moyen de maintien agit en combinaison avec une plaque de serrage (50) en matériau isolant électrique disposée sous la sangle textile (20),

2. Dispositif selon la revendication 1, selon lequel ledit dispositif est un assemblage lumineux comprenant une pluralité de diodes électroluminescentes (41) à titre de capteurs physiques, et ledit boitier (3) est muni d'un diffuseur lumineux (30).

3. Dispositif selon les revendications 1 ou 2, dans lequel la sangle textile (20) est une sangle tissée.

4. Dispositif selon l'une quelconque des revendications 1 à 3, dans lequel ledit fil conducteur (21) est intégré par tissage dans ladite sangle textile (20), de manière visible ou invisible.

5. Dispositif selon l'une quelconque des revendications 1 à 4, dans lequel ledit boitier (3) est muni de plusieurs rangées de N diffuseurs lumineux (30) chacune, N étant un nombre entier au moins égal à 2.

6. Utilisation du dispositif tel que défini selon l'une quelconque des revendications 1 à 5 dans un vêtement de sécurité.

## Patentansprüche

1. Vorrichtung, die geeignet ist, physikalische Signale zu empfangen und/oder zu emittieren, wobei die Vorrichtung umfasst:
• einen Textilgurt (20) der Breite L und der sich entlang einer Längsachse (x) erstreckt, - mindestens einen Leitungsdraht (21), der in dem Textilgurt (20) integriert ist und sich längs der Längsachse (x) erstreckt,
• eine Leiterplatte (4), die über dem Textilgurt (20) angeordnet ist und mit mindestens einem physikalischen Sensor (41) versehen ist, der geeignet ist, die physikalischen Signale zu empfangen und/oder zu emittieren,
• ein Gehäuse (3), das auf dem Textilgurt (20) mit dem Leitungsdraht (21) und der Leiterplatte angeordnet ist,
• ein Haltemittel, das den Textilgurt (20), die Leiterplatte (4) und das Gehäuse (3) umschließt, um sie dauerhaft miteinander zu verbinden, wobei das Haltemittel aus einem elektrisch leitfähigen Material ist, um die Stromversorgung der Leiterplatte (4) zu gewährleisten,
wobei das Haltemittel ein elektrisches Leitelement (51) umfasst, das ausgewählt ist aus Schrauben, Klammern, Stiften und Nieten, und wobei die Vorrichtung **dadurch gekennzeichnet ist, dass** das Haltemittel in Kombination mit einer Klemmleiste (50) aus elektrisch isolierendem Material wirkt, das unter dem Textilgurt (20) angeordnet ist,

2. Vorrichtung nach Anspruch 1, wobei die Vorrichtung eine Lichtanordnung ist, die eine Vielzahl von Leuchtdioden (41) als physikalische Sensoren umfasst und wobei das Gehäuse (3) mit einem Lichtdiffusor versehen ist (30).

3. Vorrichtung nach Anspruch 1 oder 2, wobei der Textilgurt (20) ein gewebter Gurt ist.

4. Vorrichtung nach einem der Ansprüche 1 bis 3, wobei der Leitungsdraht (21) sichtbar oder unsichtbar durch Weben in den Textilgurt (20) integriert ist.

5. Vorrichtung nach einem der Ansprüche 1 bis 4, wobei das Gehäuse (3) mit mehreren Reihen von jeweils N Lichtdiffusoren (30) versehen ist, wobei N eine ganze Zahl von mindestens gleich 2 ist.

6. Verwendung der Vorrichtung, wie nach einem der Ansprüche 1 bis 5 definiert, in einem Sicherheitskleidungsstück.

## Claims

1. Device capable of receiving and/or transmitting physical signals, said device comprising:
• a textile strap (20) having a width L and extending along a longitudinal axis (x), - at least one conductive wire (21) integrated into said textile strap (20) and extending along the longitudinal axis (x),
• a printed circuit (4) arranged above said textile strap (20) and provided with at least one physical sensor (41) capable of receiving and/or transmitting physical signals,
• a housing (3) arranged on said textile strap (20) having said conductive wire (21) and said printed circuit,
• a holding means which clamps said textile strap (20), said printed circuit (4) and said housing (3) to connect them permanently, said holding means being made of an electrically conductive material to ensure the electrical supply of said printed circuit (4),
the holding means comprising an electrically conductive element (51) selected from screws, staples, pins and rivets and said device being **characterized in that** the holding means acts in combination with a clamping plate (50) made of an electrically insulating material arranged under the textile strap (20),

2. Device according to claim 1, wherein said device is a light assembly comprising a plurality of light-emitting diodes (41) as physical sensors, and said housing (3) is provided with a light diffuser (30).

3. Device according to claims 1 or 2, wherein the textile strap (20) is a woven strap.

4. Device according to any of claims 1 to 3, wherein said conductive wire (21) is integrated by visibly or invisibly being woven in said textile strap (20).

5. Device according to any of claims 1 to 4, wherein said housing (3) is provided with multiple rows of N light diffusers (30) each, N being an integer at least equal to 2.

6. Use of the device as defined according to any of claims 1 to 5 in a security garment.
